Europäisches Patentamt

European Patent Office

Office européen des brevets

(19)

(11) Veröffentlichungsnummer : **0 530 257 B1**

(12) **EUROPÄISCHE PATENTSCHRIFT**

(45) Veröffentlichungstag der Patentschrift :
**10.08.94 Patentblatt 94/32**

(21) Anmeldenummer : **91909757.6**

(22) Anmeldetag : **22.05.91**

(86) Internationale Anmeldenummer :
**PCT/EP91/00958**

(87) Internationale Veröffentlichungsnummer :
**WO 91/18269 28.11.91 Gazette 91/27**

(51) Int. Cl.⁵ : **G01K 7/04**

(54) **FLÜSSIGSTAHL-THERMOELEMENT MIT LINEARER DRIFT.**

(30) Priorität : **22.05.90 DE 4016404**

(43) Veröffentlichungstag der Anmeldung :
**10.03.93 Patentblatt 93/10**

(45) Bekanntmachung des Hinweises auf die
Patenterteilung :
**10.08.94 Patentblatt 94/32**

(84) Benannte Vertragsstaaten :
**AT BE FR GB IT LU NL SE**

(56) Entgegenhaltungen :
**DE-A- 3 045 652**
**GB-A- 901 657**
**US-A- 3 757 206**
**US-A- 4 137 768**

(73) Patentinhaber : **Körtvelyessy, Laszlo**
**Klever Berg 21**
**D-47533 Kleve (DE)**

(72) Erfinder : **Körtvelyessy, Laszlo**
**Klever Berg 21**
**D-47533 Kleve (DE)**

(74) Vertreter : **Wagner, Karl H. et al**
**WAGNER & GEYER**
**Patentanwälte**
**Gewürzmühlstrasse 5**
**D-80538 München (DE)**

## Beschreibung

Diese Erfindung bezieht sich auf die kontinuierliche Temperaturmessung des flüssigen Stahls, aber auch auf alle Hochtemperatur-Thermoelemente mit einem äußeren Schutzrohr aus Metall und einem inneren aus Keramik.

Stand der Technik sind Thermoelementspitzen aus Platinrhodium-Platin, die im flüssigen Stahl eingetaucht, für einige Sekunden die Temperatur der Schmelze anzeigen und sich danach im Stahl auflösen.

Weiterhin Stand der Technik sind Thermoelemente nach den US Patentschriften:

4 746 534

4 721 534

4 721 533

Sie beschreiben ein Thermoelement mit drei Schutzrohren:

1. Äußerstes Schutzrohr aus Tonerde-Graphit, (61 % - 35 %,plus Stabilisatoren) das direkt im flüssigen Stahl eintaucht. Dieses Schutzrohr ist austauschbar.

2. Äußeres Schutzrohr aus reinem Molibden.

3. Inneres Schutzrohr aus reiner Tonerde mit dem gewöhnlichen Zweiloch-Isolierstab und Thermodrähten.

Das äußerste Schutzrohr ist relativ preiswert, hält aber nur eine Gießsequenz aus.Seine Lebensdauer mißt also nur eine Aufheizung und Abkühlung, weniger als einen Tag.

Der Zweiloch-Isolierstab ist möglichst rein und dick, weil die Temperatur mit 1530 - 1550 °C so hoch ist, daß bekanntlich eine dünne Isolierung elektrisch durchleiten würde und dadurch eine zu niedrige Anzeige entstehen würde.

Diese Thermoelemente waren die ersten, die im flüssigen Stahl eine kontinuierliche Temperaturmessung erlaubten. Sie ist bei Stranggießanlagen sehr wichtig. Bei einer zu niedrigen Temperatur muß der Gießvorgang abgebrochen werden.

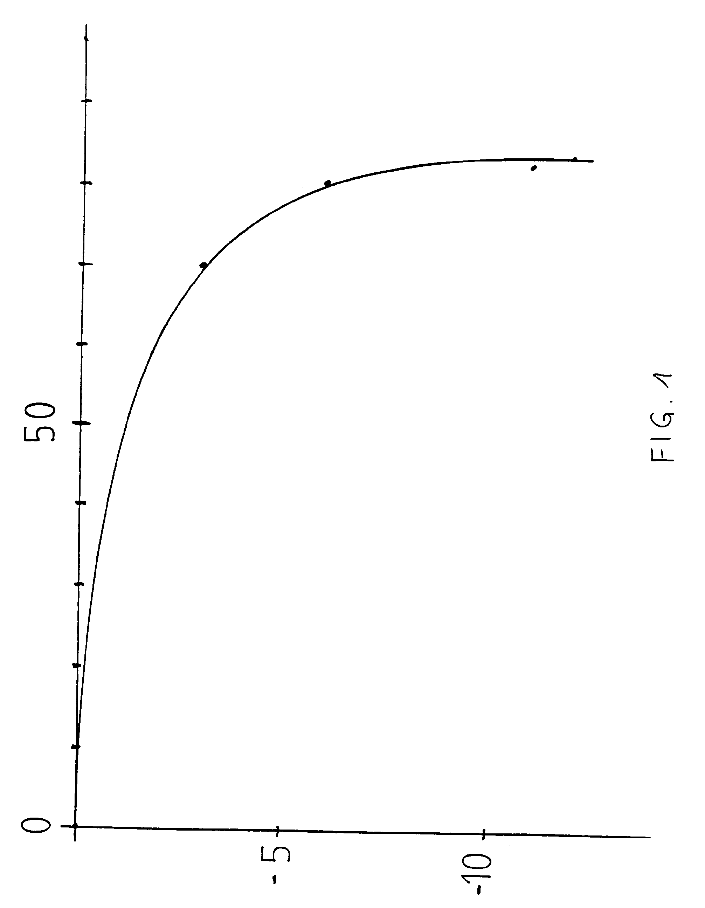

Ein Problem des oben geschilderten kontinuierlichen Thermoelementes ist aber, daß es diese zu niedrige Temperatur schon nach etwa drei Tagen fälschicherweise anzeigt, obwohl die Temperatur noch genügend (z.B. um 3 K) über der Liquidus-Temperatur liegt. Diese Drift wächst nach einer Exponentialfunktion wie Figur 1 sie nach einer tatsächlichen Messung zeigt. Die Thermospannung bricht mit zunehmender Geschwindigkeit zusammen.

Die Drift bei so hoher Temperatur ist etwas natürliches. Sie ist mit regelmäßiger Tauchmessung in Abständen von 10 Minuten leicht zu überprüfen. Wenn t die Zeit in Stunden ist, bedeutet die $\Delta T$ Drift aber nach einer Exponentialfunktion

$$\Delta T = -A \exp bt$$

einen wichtigen Betriebsumstand.

Die Meßgenauigkeit ist am Anfang besonders vorteilhaf t. Die Drift bleibt fast unmeßbar klein.

Nach einigen Tagen aber zeigt sich eine eindeutige negative Drift. Wenn sie sich das erste Mal gezeigt hat, wird sie immer gravierender. Die Drift verändert sich ständig immer schneller. Figur 1 zeigt, daß nach einer Einsatzzeit von 90 Stunden die scheinbare Temperaturänderung des flüssigen Stahls schon über 1 Kelvin pro/Std. betrug. Das Thermoelement mußte ausgewechselt werden. Somit war damit das Personal der starken Warmestrahlung und der Verletzungsgefahr ausgesetzt.

Der Vorteil dieser am Anfang sehr geringen Drift kommt also nur kurz zur Geltung. Die Drift wird mit der Einsatzzeit immer unberechenbarer.

Die Driftkurve nach Figur 1 kann von Metalidämpfen, Reaktionen in der Keramik und von der natürlichen Rhodiumdiffusion in den Thermodrähten abhängen.

Die Driftkurve zeigt einen Prozeß, der immer schneller abläuft z.B. einen Zusammenbruch des Isolationswiderstandes. Die Lösung dieses Problems gelang in einer überaschend einfachen Weise, undzwar durch eine Maßnahme die sicherlich von keinem Fachmann vorauszusehen war: die Isolierschicht zwischen den Thermodrähten wurde nicht weiter erhöht - wie jeder Fachmann es empfohlen hätte - um den Zusammenbruch der Thermospannung zu verhindern. Im Gegenteil: Diese Isolierschicht wurde sehr stark undzwar auf lediglich 0,2 mm (max. 0,5 mm) reduziert.

Es wurde sogar nur ein Thermodraht elektrisch isoliert undzwar durch ein Einloch-Isolierrohr, der andere Thermodraht lag in dem passenden Keramikschutzrohr frei.

Die Versuche zeigten, daß es besser sei, das alte Molibdenschutzrohr zu behalten, als es dem neuen sehr dünnen Keramikschutzrohr anzupassen. Optimal war die Drift, wenn für das Durchmesserverhältnis V folgender Zusammenhang bestand:

$$V = \frac{D}{d} \approx 2$$

oder

$$\text{max. } 1,5 \leqq V < 3$$

beträgt,

wobei D der Innendurchmesser des Metallschutzrohres und d der Außendurchmesser des Keramikschutzrohres ist.

Die Tauchmessungen zeigten, daß die vorher unvermeidbare exponentiale Drift annähernd linear geworden ist.

Die Ursache kann vielleicht in dem größeren Abstand zwischen Metall- und Keramikschutzrohr liegen. Somit blieb möglicherweise ein Angriff auf die elektrische Keramikisolierung aus.

Die lineare Drift ist zwar nach einem Tag etwas größer, als die exponentiale, sie bleibt aber berechenbar. Nach einigen Tagen beträgt die lineare Drift eindeutig weniger als die vorher unvermeidbare exponentiale Drift.

Diese lineare Drift läßt sich mit der Optimierung des Durchmesserverhältnisses der Thermodrähte (DE P 30 45 652.1) noch erheblich reduzieren. Man soll also den negativen Thermodraht dicker nehmen, als den positiven. Im allgemeinen soll das Durchmesserverhältnis beider Thermodrähte so eingestellt werden, daß unter gleichen Umständen auf Betriebstemperatur beide Thermodrähte die gleiche Drift bekommen.

Es ist etwas ähnliches in diesen zwei Erfindungen zu bemerken. In der vorhandenen Erfindung wird vorgeschlagen, daß die Durchmesser von zwei ineinanderliegenden Schutzrohren, damals 1980 die Durchmesser der zwei Therollrähte in ein optimales Verhältnis zu bringen sind, um die Drift zu reduzieren.

Normalerweise enthält das äußere Metallschutzrohr eines Thermoelementes ein inneres Keramikschutzrohr ohne jeglichen Abstandhalter. Die Schutzrohre sind einander angepaßt worden.

In diesem neuen Thermoelement aber nach der obigen Gleichung, muß das Keramikschutzrohr zentriert werden, um einen Bruch während des Transportes und des Betriebes zu vermeiden.

Man verwendet erfindungsgemäß in der Nähe des Thermoelementkopfes oder an der Stelle des Thermoelementes, die im Betrieb relativ kalt ist temperaturbeständige ein oder mehrere möglichst elastische kurze Rohre. Ihr Außendurchmesser beträgt D und ihr Innendurchmesser d. Ein mögliches Material ist Silikongummi.

Es ist in diesem Fall vorteilhaft, nicht gewöhnliche O-Ringe zu nehmen, weil die kurzen Rohre das interne Rohr in dem Metallschutzrohr auch gegen axiale Bewegungen festhalten.

Erfindungsgemäß soll das Keramikschutzrohr mit seinem geschlossenen Ende, am Ende des Metallschutzrohres bei diesem Zentriervorgang anliegen. Somit wird das Keramikschutzrohr während des Transportes - wenn größere Beschleunigungen auftreten - an zwei Enden fixiert.

Nach dem Eintauchen in die Schmelze dehnt sich das Metallschutzrohr wesentlich mehr als das Keramikschutzrohr aus. Dadurch bleibt das Keramikschutzrohr in dem Metallschutzrohr nur durch die Schwerkraft belastet, ohne Berührung hängen.

Nach dem Ausbau erreicht das Metallschutzrohr seine ursprüngliche Länge, dadurch wird das Keramikschutzrohr wieder an zwei Enden festgehalten und läßt sich dann ohne Gefahr transportieren. Wenn das erfindungsgemäße Thermoelement zur kontinuierlichen Messung des flüssigen Stahls eingesetzt wird, soll es in dem äußeren Schutzrohr aus Tonerde-Graphit nicht einfach hineingesteckt werden. Erfindungsgemäß soll das neue Thermoelement seinerseits mit einem Zentrierstück in das äußerste Schutzrohr gelegt werden. Letzteres kann eine Kegel- oder Zylinderform mit Abdeckscheiben haben. Dieses Zentrierstück soll das Metallschutzrohr so festhalten, daß es selbst bei der höchsten Betriebstemperatur, das geschlossene Ende des äußersten Tonerde-Graphit-Schutzrohres nicht erreicht.

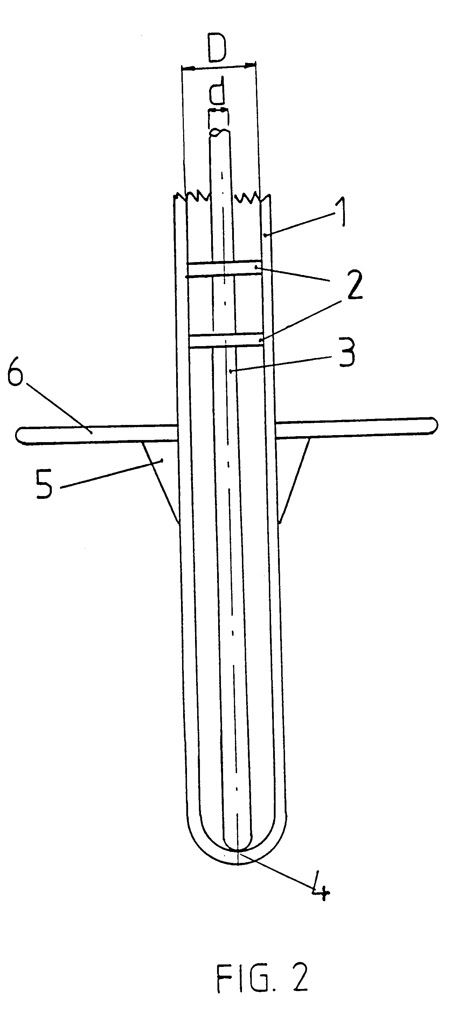

Eine mögliche Ausführung der Erfindung wird in Figur 2 schematisch dargestellt. Das äußere Metallschutzrohr (1) (mit einem Innendurchmesser D), trägt mit Hilfe der zwei kurzen Rohre (2) das dünne Keramikschutzrohr (3) (mit einem äußeren Durchmesser von d). Das Keramikschutzrohr (3) liegt im kalten Zustand beim Punkt 4 auf der inneren Kuppe des Metallschutzrohres (1). Eine mögliche Zentrierung besteht aus einem Kegel (5) und aus einer Scheibe (6), die an dem Metallschutzrohr (1) angeschraubt, -geschweißt oder anders befestigt sind.

Vorteile dieser Erfindung sind:

1. Die Lebensdauer ist länger als eine Woche.
2. Die Drift ist berechenbar. Man kann sie mit dem Gießcomputer leicht beherrschen.
3. Man verbraucht weniger Thermoelementspitzen bei der einmaligen Messung des flüssigen Stahls.
4. Das Thermoelement ist leicht, praktisch ohne Werkzeuge herstellbar.
5. Das wertvolle Platin und Rhodium kann aus dem verbrauchten Thermoelement leicht ausgebaut werden. Wertvolle Bestandteile können mehrmals verwendet werden.
6. Das Thermoelement läßt sich problemlos transportieren.
7. Das Thermcelement hat die gleichen Außenmaße wie bisher. Es ist also ohne Änderung der Technologie einsetzbar.
8. Die Herstellungskosten sind niedriger, da die Masse der Keramikteile geringer ist.
9. Trotz eines großen Luftspaltes zwischen Metall- und Keramikschutzrohr ist die Zeitkonstante des neuen Thermoelementes nicht merkbar größer geworden. Wahrscheinlich weil die schlecht leitenden Keramikteile dünner geworden sind.
10. In dem neuen Thermoelement trat viel weniger Korrosion zwischen den Schutzrohren auf, als in der bekannten Ausführung.

**Patentansprüche**

1. Thermoelement bestehend aus einem äußeren Metallschutzrohr (1), innerem Keramikschutzrohr (3), positiven und negativen Thermodräht, die voneinander keramisch isoliert sind, dadurch gekennzeichnet, daß der äußere Durchmesser (d) des Keramikschutzrohres (3) und der innere Durchmesser des Metallschutzrohres (1) D im folgenden Verhältnis zueinander stehen:

$$1{,}5 \leq \frac{D}{d} < 3$$

**2.** Thermoelement nach Patentanspruch 1,
dadurch gekennzeichnet,
daß das innere Keramikschutzrohr (3) mit Hilfe von ein oder mehreren kurzen Rohren (2) in der Nähe des Thermoelementkopfes im Metallschutzrohr (1) zentriert ist oder im allgemeinen an der Stelle des Thermoelementes, die im Betrieb relativ kalt ist.

**3.** Thermoelement nach Ansprüch 2,
dadurch gekennzeichnet,
daß die Zentrierung mit den kurzen Rohren (2) so eingestellt ist, daß das Keramikschutzrohr (3) das Metallschutzrohr (1) an der inneren Kuppe (4) des Metallschutzrohres (1) im kalten Zustand berührt.

**4.** Thermoelement nach einem oder mehreren der vorhergehenden Ansprüche,
dadurch gekennzeichnet,
daß der positive Thermodraht durch ein sehr dünnwandiges (max. 0,5 mm), sehr dünnes Einloch-Isolierrohr elektrisch isoliert ist.

**5.** Thermoelement nach einem oder mehreren der vorhergehenden Ansprüche,
dadurch gekennzeichnet,
daß das Metallschutzrohr (1) in dem Tonerde-Graphitschutzrohr mit Hilfe von einem Zentrierstück - z.B. bestehend aus einem Kegel (5) und einer Scheibe (6) - befestigt ist; undzwar so, daß das geschlossene Ende des Metallschutzrohres (1) das geschlossene Ende des Tonerde- Graphitschutzrohres betriebsmäßig nicht erreicht.

**6.** Thermoelement nach einem oder mehreren der vorhergehenden Ansprüche,
dadurch gekennzeichnet,
daß der negative Thermodraht - oder im allgemeinen der Thermodraht der von den beiden die höhere Drift unter gleichen Umständen aufweist - dicker ist; das Durchmesserverhältnis beider Thermodrähte ist so gewählt, daß unter gleichen Umständen beide die gleiche Drift bekommen.

## Claims

**1.** A thermo-couple comprising an outer metallic protective tube (1), an inner ceramic protective tube (3), and a positive and a negative thermo wire, said wires being ceramically insulated from one another,
characterized in that
the outer diameter (d) of the ceramic protective tube (3) and the inner diameter (D) of the metallic protective tube (1) are related to one another in the following way:

$$1{,}5 \leq \frac{D}{d} < 3$$

**2.** The thermo-couple according to claim 1, characterized in that the inner ceramic protective tube (3) is centered adjacent to the head of the thermo-couple in the metallic protective tube (1) by means of one or a plurality of short tubes (2) or, generally, at a location of the thermo-couple, that is relatively cool during operation.

**3.** The thermo-couple according to claim 2, characterized in that the centering with the short tubes (2) is adjusted in such a way, that the ceramic protective tube (3) touches the metallic protective tube (1) at the inner top (4) of the metal protective tube (1) in the cold state.

**4.** The thermo-couple according to one or more of the preceding claims, characterized in that the positive thermo-wire is electrically insulated by means of a very thin walled (max 0.5 mm), very thin one hole insulation tube.

**5.** The thermo-couple according to one or more of the preceding claims, characterized in that the metallic protective tube (1) is fixed within the argillacious earth-graphite protective tube by means of centering member, which is, for example, composed of a cone (5) and of a disc (6), in such a way, that the closed end of the metal protective tube (1) does not reach the closed end of the argillacious earth-graphite protective tube during operation.

**6.** The thermo-couple according to one or more of the preceding claims, characterized in that the negative thermo-wires or generally speaking the thermo-wire that shows under the same circumstances the greater drift of both, is thicker, and that the ratio of the diameters of both thermo-wires is selected such, that both have the same drift under the same circumstances.

## Revendications

**1.** Thermocouple constitué par un tube de protection métallique extérieur (1), un tube de protection céramique intérieur (3), des fils thermoélectriques positif et négatif qui sont isolés l'un de l'autre par une céramique, caractérisé en ce que le diamètre extérieur (d) du tube de protection céramique (3) et le diamètre intérieur (D) du tube de protection métallique (1) sont entre eux dans le

rapport suivant :

$$1,5 < D/d < 3$$

2. Thermocouple selon la revendication 1, caractérisé en ce que le tube de protection céramique intérieur (3) est centré dans le tube de protection métallique (1) à l'aide d'un ou de plusieurs tubes courts (2) à proximité de la tête du thermocouple ou d'une manière générale en une partie du thermocouple, qui est relativement froide en fonctionnement.

3. Thermocouple selon la revendication 2, caractérisé en ce que le centrage avec les tubes courts (2) est réglé de telle sorte qu'à l'état froid, le tube de protection céramique (3) est en contact avec le tube de protection métallique (1) au niveau de la calotte interne (4) de ce dernier.

4. Thermocouple selon l'une ou plusieurs des revendications précédentes, caractérisé en ce que le fil thermoélectrique positif est isolé électriquement par un tube isolant à un trou, très mince et à paroi très mince (max 0,5 mm).

5. Thermocouple selon l'une ou plusieurs des revendications précédentes, caractérisé en ce que le tube de protection métallique (1) est fixé dans le tube de protection en alumine - graphite à l'aide d'un élément de centrage - constitué par exemple par un cône (5) et un disque (6) - ; et ce de telle sorte que l'extrémité fermée du tube de protection métallique (1) n'atteint pas, en fonctionnement, l'extrémité fermée du tube de protection en alumine - graphite.

6. Thermocouple selon l'une ou plusieurs des revendications précédentes, caractérisé en ce que le fil thermoélectrique négatif - ou d'une manière générale le fil thermoélectrique qui, des deux, possède la dérive la plus grande dans les mêmes conditions - est plus épais; et que le rapport des diamètres des deux fils thermoélectriques est choisi de telle sorte que, dans les mêmes conditions, les deux fils sont le siège de la même dérive.

FIG. 1

FIG. 2